# FASCICULE DE BREVET EUROPEEN

(11) **EP 1 418 100 B1**
(45) Date de publication et mention de la délivrance du brevet: **13.07.2005**
(21) Numéro de dépôt: 03292790.7
(22) Date de dépôt: 07.11.2003
(51) Int. Cl.: B60S 1/38

(54) **Raclette d'essuyage pour balai d'essuie-glace de véhicule automobile**
Wischblatt für den Scheibenwischer eines Kraftfahrzeuges
Wiper blade for a windscreen wiper of a motor vehicle

(30) Priorité: 08.11.2002 FR 0213976
(43) Date de publication de la demande: 12.05.2004
(73) Titulaire: Peugeot Citroen Automobiles S.A., 78140 Vélizy Villacoublay (FR)
(72) Inventeur: Jeuffe, Gérard Michel, 78810 Feucherolles (FR)
(74) Mandataire: Robert, Jean-François

(56) Documents cités:
- DE-A- 3 614 335
- DE-A- 19 745 686
- US-A- 4 123 817
- US-A- 5 383 247
- US-A- 5 572 765

## Description

La présente invention concerne une raclette d'essuyage pour balai d'essuie-glace de véhicule automobile.

Elle se rapporte plus particulièrement à une raclette d'essuyage comportant de manière classique une lèvre d'essuyage et une vertèbre de rigidification agencées dans un carter.

Les pare-brises des véhicules automobiles modernes apparaissent de plus en plus complexes dans leur forme de réalisation entraînant par voie de conséquence des défauts de planéité de la surface, c'est-à-dire des sommets et des creux sur la surface.

Les raclettes d'essuyage des balais d'essuie-glace actuels ne permettent pas de nettoyer correctement les pare-brises comportant des défauts de planéité de la surface ; la raclette en caoutchouc souple n'atteignant pas les creux lorsque celle-ci se situe sur une zone d'essuyage constituée de sommets. En effet, en présence de sommets et de creux, les sommets provoquent une compression différente de la lèvre à certains endroits entraînant un retournement brutal et bruyant de la lèvre.

On connaît déjà dans l'état de la technique antérieure, notamment par la demande de brevet GB 2 352 966, un balai d'essuie-glace du type décrit ci-dessus comportant en outre des moyens de suspension disposés entre la lame et le porteur permettant d'augmenter l'efficacité de l'essuyage dans le cas des lames très longues et/ou utilisées sur un grand pare-brise avec des variations extérieures substantielles de surface.

Ces moyens de suspension peuvent être constitués d'un fluide ou d'une mousse logée dans le porteur.

Bien que ce type de conception de balai d'essuie-glace soit connu, il continue de faire l'objet de développements visant à simplifier sa fabrication et à réduire son coût.

Ainsi, l'invention a pour but de proposer une raclette d'essuyage perfectionnée qui soit simple à réaliser et peu coûteuse.

A cet effet, la présente invention a pour objet une raclette d'essuyage pour balai d'essuie-glace de véhicule automobile comportant une lèvre d'essuyage et une vertèbre de rigidification agencées dans un carter ainsi que des moyens de suspension disposés entre la lèvre d'essuyage et la vertèbre de rigidification, caractérisée en ce que les moyens de suspension sont constitués d'un matériau résilient creux fermé dans ses extrémités, rempli d'un gaz sous pression, reliant la vertèbre à la lèvre, ledit matériau résilient creux présentant en coupe transversale la forme d'un demi-cercle dont le sommet de l'arc de cercle est prolongé par une partie saillant formant charnière pour l'articulation de la lèvre et en ce que l'épaisseur du matériau résilient au droit du sommet de l'arc de cercle est variable sur toute la longueur de la raclette formant des sections différentes de passage du gaz à l'intérieur du matériau résilient.

Selon une caractéristique avantageuse de la présente invention, le matériau résilient comporte au moins une canalisation agencée sur la longueur de la raclette destinée à acheminer un liquide de lavage de vitre sur la surface vitrée. Une pluralité d'orifices est avantageusement régulièrement répartie sur la longueur du matériau résilient afin de libérer le liquide de lavage sur la surface vitrée.

Selon une vanante de réalisation, chacune des canalisations comporte en outre une résistance pour chauffer ledit liquide.

Selon une autre caractéristique avantageuse de la présente invention, la raclette d'essuyage comporte des moyens permettant de faire varier la pression à l'intérieur du matériau résilient en fonction de la vitesse du véhicule.

Selon encore une autre caractéristique avantageuse de la présente invention le matériau résilient est réalisé préférentiellement en caoutchouc.

Un autre objet de la présente invention concerne un balai d'essuie-glace de véhicule automobile pourvu d'une raclette telle qu'elle vient d'être décrite.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue en coupe longitudinale d'une raclette selon l'invention en position sur une vitre de pare-brise,
- les figures 2 à 4 sont des vues en coupe transversale respectivement selon les lignes II-II, III-III et IV-IV de la figure 1, et
- la figure 5 est une vue en coupe transversale d'une variante de réalisation d'une raclette selon la présente invention.

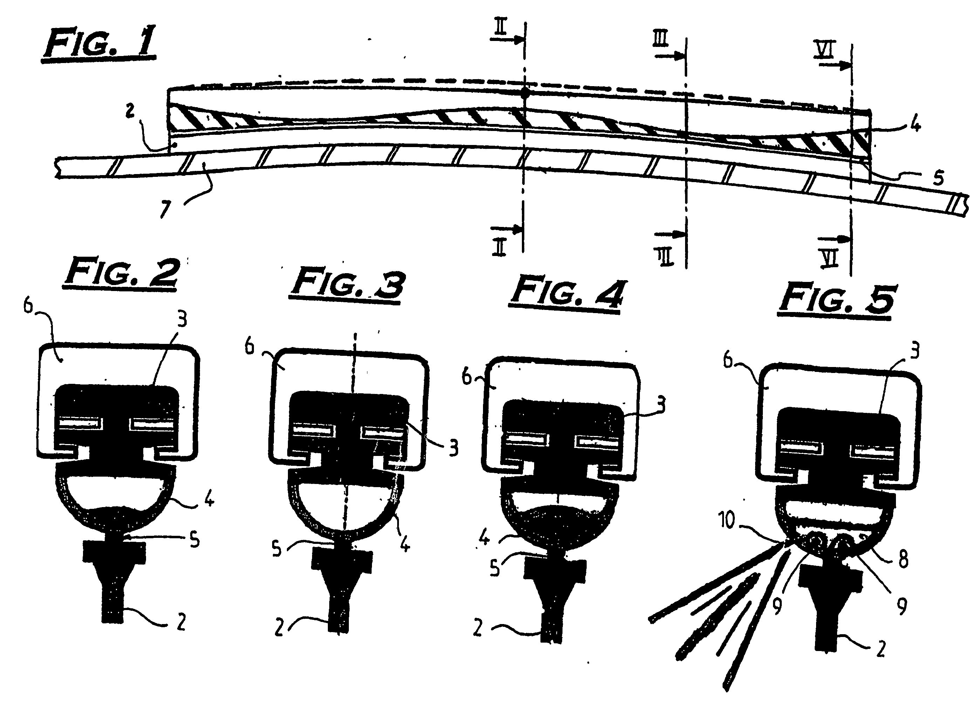

On a représenté sur les figures 1 à 4, une raclette d'essuyage 1 pour balai d'essuie-glace de véhicule automobile comportant classiquement une lèvre d'essuyage 2 et une vertèbre de rigidification 3 agencées dans un carter 6 ainsi que des moyens de suspension 4 disposés entre la lèvre d'essuyage 2 et la vertèbre de rigidification 3.

Selon la présente invention, les moyens de suspension 4 sont constitués d'un matériau résilient creux, rempli d'un gaz sous pression, reliant la vertèbre 3 à la lèvre 2, ledit matériau résilient creux présentant en coupe transversale la forme d'un demi-cercle dont le sommet de l'arc de cercle est prolongé par une partie saillante 5 formant charnière pour l'articulation de la lèvre 2.

On notera que l'épaisseur du matériau résilient au droit du sommet de l'arc de cercle est variable sur toute la longueur de la raclette formant ainsi des sections différentes de passage du gaz à l'intérieur du matériau résilient, comme visible sur les figures 2 à 4, permettant de provoquer une force d'appui de la raclette sur la surface vitrée différente selon la section de passage du gaz.

Ces différentes forces d'appui permettent en outre d'absorber par la déformation élastique de la raclette 1, obtenue par les moyens de suspension 4, les défauts de courbure du pare-brise.

Selon une variante de réalisation, la raclette comporte des moyens, non représentés, permettant de faire varier, en fonction de la vitesse du véhicule la pression à l'intérieur du matériau résilient creux, améliorant ainsi la qualité d'essuyage à haute vitesse.

Pour ce faire, on comprend que les moyens sont constitués d'une source d'alimentation en gaz pilotée par un calculateur qui, en fonction des informations reçues d'un capteur de vitesses du véhicule, augmente ou réduit la pression du gaz à l'intérieur du matériau résilient 4.

Selon une autre variante de réalisation représentée à la figure 5, le matériau résilient comporte au moins une canalisation 8 agencée sur la longueur de la raclette 1 destinée à acheminer un liquide de lavage de vitre sur la surface vitrée 7. Chacune des canalisations peut comporter en outre au moins une résistance électrique 9 pour chauffer ledit liquide afin d'éviter le gel de ce dernier.

Afin d'acheminer le liquide de la canalisation 8 jusque sur la surface vitrée le matériau résilient 4 est pourvu d'une pluralité d'orifices régulièrement répartie sur la longueur de la raclette 1.

On comprend à la lecture de la description ci-dessus que la raclette selon la présente invention est relativement simple à réaliser et permet, par la déformation du matériau résilient, de compenser les défauts de planéité de la surface vitrée.

Bien que l'invention ait été décrite en liaison avec un mode de réalisation particulier elle comprend tous les équivalents techniques des moyens décrits.

Par ailleurs, on notera que la raclette selon la présente invention s'applique aussi bien pour les pare-brises que pour les lunettes arrière de véhicule automobile ou pour autres dispositifs comprenant une surface vitrée nécessitant un nettoyage tel par exemple un pare-brise de train.

## Revendications

1. Raclette d'essuyage pour balai d'essuie-glace de véhicule automobile comportant une lèvre d'essuyage (2) et une vertèbre de rigidification (3) agencées dans un carter (6) ainsi que des moyens de suspension (4) disposés entre la lèvre d'essuyage (2) et la vertèbre de rigidification (3), **caractérisée en ce que** les moyens de suspension (4) sont constitués d'un matériau résilient creux, rempli d'un gaz sous pression, reliant la vertèbre (3) à la lèvre (2), ledit matériau résilient creux présentant en coupe transversale la forme d'un demi-cercle dont le sommet de l'arc de cercle est prolongé par une partie saillante (5) formant charnière pour l'articulation de la lèvre (2) et **en ce que** l'épaisseur du matériau résilient au droit du sommet de l'arc de cercle est variable sur toute la longueur de la raclette formant des sections différentes de passage du gaz à l'intérieur du matériau résilient.

2. Raclette d'essuyage selon la revendication 1, **caractérisée en ce que** le matériau résilient comporte au moins une canalisation (8) agencée sur la longueur de la raclette (1) destinée à acheminer un liquide de lavage de vitre sur la surface vitrée et **en ce qu'**une pluralité d'orifices (10) est régulièrement répartie sur la longueur du matériau résilient (4) afin de libérer le liquide de lavage sur la surface vitrée.

3. Raclette d'essuyage selon la revendication 2, **caractérisée en ce que** chacune des canalisations (8) comporte en outre une résistance (9) pour chauffer ledit liquide.

4. Raclette d'essuyage selon l'une quelconque des revendications précédentes, **caractérisée en ce qu'**elle comporte des moyens permettant de faire varier la pression à l'intérieur du matériau résilient en fonction de la vitesse du véhicule.

5. Raclette d'essuyage selon l'une quelconque des revendications précédentes, **caractérisée en ce que** le matériau résilient (4) est réalisé en caoutchouc.

6. Balai d'essuie-glace de véhicule automobile, **caractérisé en ce qu'**il est pourvu d'une raclette (1) conforme à l'une quelconque des revendications 1 à 5.

## Patentansprüche

1. Wischblatt für einen Scheibenwischer eines Kraftfahrzeugs mit einer Wischlippe (2) und einem Versteifungswirbel (3), die in einem Gehäuse (6) angeordnet sind, sowie mit Federungsmitteln (4), die zwischen der Wischlippe (2) und dem Versteifungswirbel (3) angeordnet sind, **dadurch gekennzeichnet, dass** die Federungsmittel (4) aus einem hohlen elastischen Material bestehen, das mit unter Druck stehendem Gas gefüllt ist und den Wirbel (3) mit der Lippe (2) verbindet, wobei das hohle elastische Material einen Querschnitt in Form eines Halbkreises aufweist, dessen Spitze von einem vorspringenden Abschnitt (5) verlängert wird, der für das Gelenk der Lippe (2) ein Scharnier bildet, und **dadurch**, dass die Dicke des elastischen Materials senkrecht zur Spitze des Kreisbogens über die gesamte Länge des Wischblatts variabel ist und verschiedene Durchgangsbereiche des Gases innerhalb des elastischen Materials bildet.

2. Wischblatt nach Anspruch 1, **dadurch gekennzeichnet, dass** das elastische Material mindestens eine Leitung (8) auf der Länge des Wischblatts (1) aufweist, die eine Scheibenwaschflüssigkeit auf die Glasoberfläche leitet, und **dadurch** dass mehrere Öffnungen (10) gleichmäßig über die Länge des elastischen Materials (4) verteilt sind, um die Waschflüssigkeit auf die Glasoberfläche zu bringen.

3. Wischblatt nach Anspruch 2, **dadurch gekennzeichnet, dass** jede Leitung (8) darüber hinaus einen Widerstand (9) zum Erwärmen der Flüssigkeit aufweist.

4. Wischblatt nach einem der vorhergehenden Ansprüche, **dadurch gekennzeichnet, dass** es Mittel aufweist, die es erlauben, den Druck innerhalb des elastischen Materials abhängig von der Geschwindigkeit des Fahrzeugs zu variieren.

5. Wischblatt nach einem der vorhergehenden Ansprüche, **dadurch gekennzeichnet, dass** das elastische Material (4) aus Gummi ist.

6. Scheibenwischer für ein Kraftfahrzeug, **dadurch gekennzeichnet, dass** er mit einem Wischblatt (1) nach einem der Ansprüche 1 bis 5 versehen ist.

## Claims

1. Wiping scraper for windscreen wiper blade of a motor vehicle comprising a wiper lip (2) and a stiffening vertebra (3) arranged in a housing (6) as well as suspension means (4) disposed between the wiper lip (2) and the stiffening vertebra (3), **characterised in that** the suspension means (4) are constituted by a hollow resilient material, filled with a pressurised gas, connecting the vertebra (3) to the lip (2), said hollow resilient material having, in cross section, the shape of a half-circle, in which the top of the arc of the circle is extended by a projecting member (5) forming a hinge for the articulation of the lip (2), and **in that** the thickness of the resilient material in line with the top of the arc of the circle is variable over the whole length of the scraper forming different sections through which gas can pass inside the resilient material.

2. Wiping scraper according to Claim 1, **characterised in that** the resilient material comprises at least one passage (8) arranged over the length of the scraper (1) intended to convey a windscreen washing liquid over the glazed surface and **in that** a plurality of openings (10) is distributed regularly over the length of the resilient material (4) so as to release the washing liquid over the glazed surface.

3. Wiping scraper according to Claim 2, **characterised in that** each of the passages (8) further comprises a resistor (9) to heat said liquid.

4. Wiping scraper according to any one of the preceding claims, **characterised in that** it comprises means allowing the pressure inside the resilient material to be varied as a function of the speed of the vehicle.

5. Wiping scraper according to any one of the preceding claims, **characterised in that** the resilient material (4) is made of rubber.

6. Windscreen wiper blade of a motor vehicle, **characterised in that** it is provided with a scraper (1) in accordance with any one of Claims 1 to 5.
